# EUROPEAN PATENT SPECIFICATION

(11) **EP 4 660 054 B1**
(45) Date of publication and mention of the grant of the patent: **02.12.2026**
(21) Application number: 25178690.1
(22) Date of filing: 26.05.2025
(51) Int. Cl.: B62D 21/15, B62D 25/02

(54) **LOWER STRUCTURE OF VEHICLE**
UNTERE STRUKTUR EINES FAHRZEUGS
STRUCTURE INFÉRIEURE DE VÉHICULE

(30) Priority: 07.06.2024 JP 2024093034
(43) Date of publication of application: 10.12.2025
(73) Proprietor: MAZDA MOTOR CORPORATION, Hiroshima 730-8670 (JP)
(72) Inventor: Kamemoto, Eiji, Aki-gun, Hiroshima, 730-8670 (JP)
(74) Representative: Lorenz Seidler Gossel Part. mbB

(56) References cited:
- WO-A1-2019/162583
- JP-A- 2021 091 341
- US-A1- 2022 111 904
- US-A1- 2023 102 921
- US-A1- 2023 331 309
- US-A1- 20240 140 532

## Description

### BACKGROUND OF THE INVENTION

The present invention relates to a lower structure of a vehicle.

It has been considered to arrange a reinforcing member inside a side sill as countermeasures for a pole side-collision of a vehicle.

Japanese Patent Laid-Open Publication No. 2021-024350, for example, discloses a vehicle-body structure in which a reinforcing member (reinforcement) having a continuous-cylindrical structure in which plural polygonal-shaped closed-cross sections are continuous when viewed in a vehicle width direction and a deformation-control member to control deformation, in a vehicle longitudinal direction, of the continuous-cylindrical structure of the reinforcing member are arranged inside a side sill extending in a vehicle longitudinal direction.

In the vehicle-body structure of the above-described patent document, the load (load-bearing) capacity along the vehicle width direction is improved by the cylindrical structure of the reinforcement. Further, in the vehicle-body structure of the above-described patent document, the bending deformation of the reinforcement is suppressed by the deformation-control member in the vehicle side collision. However, if a whole part of the reinforcement is constituted by the cylindrical structure, a gross area of the reinforcement becomes too large, and therefore the vehicle-body weight may increase improperly. Further, since it is necessary to provide the deformation-control member additionally in the vehicle-body structure of the above-described patent document, providing the deformation-control member further increases the vehicle-body weight. Document US 2023/102921 A1 shows a lower structure according to the preamble of claim 1.

### SUMMARY OF THE INVENTION

The present invention has been devised in view of the above-described matter and an object of the present invention is to provide a lower structure of a vehicle which can properly improve the absorption amount of a collision load in the vehicle side collision, suppressing an increase of the vehicle-body weight.

The present invention is a lower structure of a vehicle, comprising a pair of right-and-left side sills extending in a vehicle longitudinal direction and having a closed-cross section, cross members extending in a vehicle width direction between the pair of side sills and provided to be separated from each other in the vehicle longitudinal direction, and a reinforcement extending in the vehicle longitudinal direction inside the closed-cross section of each of the pair of side sills at a position, in a vertical direction, thereof which overlaps the cross members and reinforcing the side sill, wherein the reinforcement includes a lateral wall portion expanding in the vehicle longitudinal direction and in the vehicle width direction, has a first area portion which overlaps the cross members in the vehicle longitudinal direction and a second area portion which does not overlap the cross members in the vehicle longitudinal direction, and surface stiffness (rigidity) of the lateral wall portion at the second area portion is larger than that of the lateral wall portion at the first area portion.

According to the present invention, when the pole-side collision occurs at the first area portion, the collision load can be efficiently transmitted to the cross member by the first area portion. Meanwhile, when the pole-side collision occurs at the second area portion, the absorption amount of the collision load can be improved by the lateral wall portion with the relatively-large surface stiffness (rigidity). Further, since the lateral wall portion is provided just as the reinforcement, the increase of the vehicle-body weight can be suppressed. Accordingly, the lower structure can properly improve the absorption amount of the collision load in the vehicle side collision, suppressing the increase of the vehicle-body weight.

In an embodiment of the present invention, the lateral wall portion at the second area portion has an arc-shaped bead which protrudes in the vertical direction.

According to this embodiment, the surface stiffness can be increased by the bead. Further, the weight increase of the lateral wall portion is small even if the bead is formed. Accordingly, the lower structure can properly improve the absorption amount of the collision load in the vehicle side collision, suppressing the increase of the vehicle-body weight.

In another embodiment of the present invention, the lateral wall portion at the second area portion has a ridgeline portion which extends in the vehicle width direction.

According to this embodiment, the surface stiffness can be increased by the ridgeline portion. Further, the weight increase of the lateral wall portion is small even if the ridgeline portion is formed, because the ridgeline can be just formed by bending process of the lateral wall portion. Accordingly, the lower structure can properly improve the absorption amount of the collision load in the vehicle side collision, suppressing the increase of the vehicle-body weight.

In another embodiment of the present invention, the lateral wall portion comprises an upper-side lateral wall portion which is provided at a relatively upper side and a lower-side lateral wall portion which is provided at a relatively lower side, and each of the upper-side lateral wall portion and the lower-side lateral wall portion at the second area portion has the above-described bead.

According to this embodiment, since the surface stiffness of each of the upper-side lateral wall portion and the lower-side lateral wall portion increases, the lower structure can improve the absorption amount of the collision load in the vehicle side collision.

In another embodiment of the present invention, an upper-side bead as the bead provided at the upper-side lateral wall portion is configured to be recessed downward, a lower-side bead as the bead provided at the lower-side lateral wall portion is configured to be recessed upward, and the upper-side bead and the lower-side bead overlap each other in a plan view.

According to this embodiment, when the lateral wall portion is deformed in the vehicle side collision, the upper-side bead is deformed such that it protrudes downward and the lower-side bead is deformed such that it protrudes upward. Since the upper-side bead and the lower-side bead overlap each other in the plan view, the upper-side bead and the lower-side bead contact each other due to their deformations. Thereby, the compressive deformation of the lateral wall portion does not occur easily, so that the absorption amount of the collision load is improved. The lower structure can improve the absorption amount of the collision load in the vehicle side collision.

In another embodiment of the present invention, an apex portion of the upper-side bead and another apex portion of the lower-side bead overlap each other in the plan view.

According to this embodiment, the upper-side bead and the lower-side bead contact each other in an early stage in the vehicle side collision. Accordingly, the lower structure can improve the absorption amount of the collision load in the vehicle side collision.

In another embodiment, said upper-side bead may comprise a first upper-side bead and a second upper-side bead. In addition or alternatively, said lower-side bead may comprise a first lower-side bead and a second lower-side bead. The first and second beads may differ from each other in their shape. Alternatively, the first and second bead may have the same shape, hover, their orientation is different to each other, preferably the position of the apex portion may be different between the first upper-side bead and the second upper-side bead and/or the position of the apex portion may be different between the first lower-side bead and the second lower-side bead.

In another embodiment of the present invention, the bead is of a polygonal shape in a plan view.

According to this embodiment, the ridgeline extending in the vehicle width direction can be formed at the same time of the bead forming. Further, the beads can be arranged closely, compared to a case where the bead is of a circular shape. Accordingly, the lower structure can improve the absorption amount of the collision load in the vehicle side collision.

In another embodiment of the present invention, the bead is of a triangular shape or a rectangular shape in the plan view.

According to this embodiment, the beads can be arranged closely. Accordingly, the lower structure can improve the absorption amount of the collision load in the vehicle side collision.

In another embodiment of the present invention, the lateral wall portion at the first area portion has a ridgeline portion which extends in the vehicle width direction.

According to this embodiment, since the rigidity against the collision load applied in the vehicle width direction is increased by the ridgeline portion, the collision load can be efficiently transmitted to the cross member. Further, since the ridgeline portion is compressively deformed, the collision load can be absorbed. Also, since the ridgeline portion can be formed just by the bending process, forming of the ridgeline portion does not increase the weight of the lateral wall portion very much. Accordingly, the lower structure can improve the absorption amount of the collision load in the vehicle side collision, suppressing the vehicle-body weight.

In another embodiment, at least one of the lateral wall portions at the first area portion is of an uneven shape, in particular of a concave-and-convex shape, when viewed in the lateral direction. Said lateral wall portion at the first area portion may comprise a first flat-face portion located at a relatively upper side, a second flat-face portion located at a relatively lower side, and a connection portion connecting said first flat-face portion and said second flat-face portion in the vertical direction, and said first ridgeline portions are positioned between said first flat-face portion and said connection portion and between said second flat-face portion and said connection portion.

In another embodiment of the present invention, the lateral wall portion comprises an upper-side lateral wall portion which is provided at a relatively upper side and a lower-side lateral wall portion which is provided at a relatively lower side, the reinforcement further includes a pair of right-and-left vertical wall portion which connect respective right-side end portions of the upper-side lateral wall portion and the lower-side lateral wall portion and respective left-side end portions of the upper-side lateral wall portion and the lower-side lateral wall portion in the vertical direction, and the upper-side lateral wall portion, lower-side lateral wall portion, and the pair of right-and-left vertical wall portions are integrated.

According to this embodiment, since it is suppressed that the lateral wall portion is bending-deformed by the vertical wall portion, the lower structure can improve the absorption amount of the collision load in the vehicle side collision.

In another embodiment, the first area portion of the reinforcement and the second area portion of the reinforcement may be made of a single member and integrally formed seamlessly.

Another aspect of the invention is directed to a vehicle including a lower structure according to the invention.

As described above, the lower structure according to the present invention can properly improve the absorption amount of the collision load in the vehicle side collision, suppressing the increase of the vehicle-body weight.

The present invention will become apparent from the following description which refers to the accompanying drawings.

### BRIEF DESCRIPTION OF THE DRAWINGS

FIG. **1** is a plan view showing a vehicle body of a vehicle equipped with a lower structure according to an exemplified embodiment.
FIG. **2** is a plan view around a right-side side sill, when viewed from an upper side.
FIG. **3** is a sectional view taken along lone III-III of FIG. **2****.**
FIG. **4** is a sectional view taken along lone IV-IV of FIG. **2****.**
FIG. **5** **is** a schematic view showing a structure of a reinforcement.
FIG. **6** is a perspective view of a first area portion of the reinforcement.

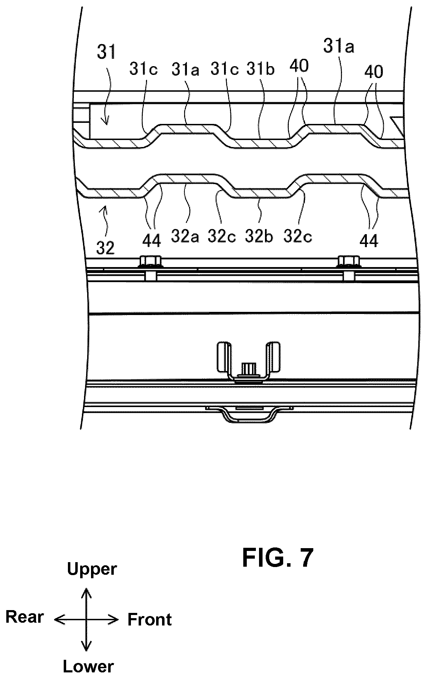

FIG. **7** is a sectional view taken along lone VII-VII of FIG. **3****.**
FIG. **8** is a sectional view taken along lone VIII-VIII of FIG. **2****.**
FIG. **9** is a perspective view of a second area portion of the reinforcement.
FIG. **10** is a plan view of the second area portion of the reinforcement.
FIG. **11** is a sectional view taken along lone XI-XI of FIG. **10****.**
FIG. **12** is a sectional view showing a deformation state of the second area portion of the reinforcement in a vehicle side collision, which occurs just after collision of a collision object.
FIG. **13** is a sectional view showing a deformation state of the second area portion of the reinforcement in the vehicle side collision, which occurs when the collision object comes in toward an inward side, in a vehicle width direction, of a vehicle body subsequently to the collision of the collision object.

### DETAILED DESCRIPTION OF THE INVENTION

Hereafter, exemplified embodiments of the present invention will be described specifically referring to the drawings. In the following description, respective positions (directions) of front, rear, left, right, upper and lower relative to a vehicle **1** will be merely referred to as the "front," "rear," "left," "right," "upper" and "lower." A lateral direction corresponds to a vehicle width direction.

### (1) Whole Structure of Lower Portion of Vehicle

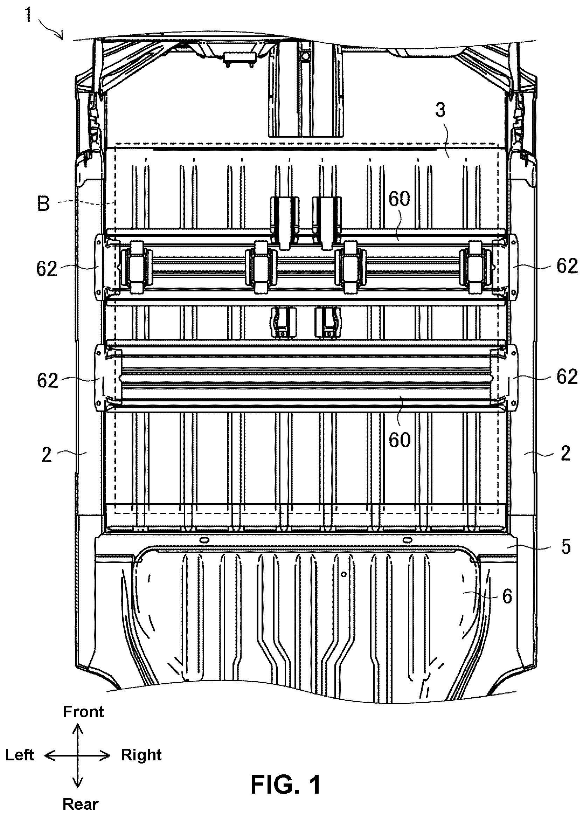

FIG. **1** shows a lower vehicle body of the vehicle **1** provided with a lower structure according to the present embodiment. The vehicle **1** is a four-door type passenger vehicle. In the present embodiment, the vehicle **1** has a laterally-symmetrical vehicle-body structure.

The vehicle **1** comprises a pair of right-and-left side sills **2.** Each of the pair of side sills **2** extends straightly in a longitudinal direction. The side sill **2** has a structure having a closed-cross section, and the closed-cross section extends straightly in the longitudinal direction, which will be specifically described later.

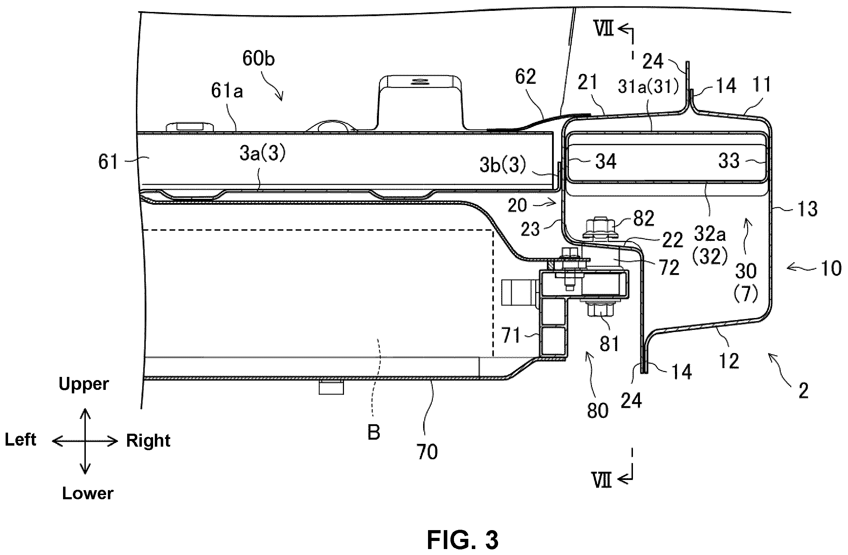

The vehicle **1** comprises a floor panel **3** which forms a floor face of a cabin. The floor panel **3** comprises a floor panel body **3a** (see FIGS. **3** and others) which expands in the vehicle width direction and in the longitudinal direction and floor-panel joint portions **3b** (see FIGS. **3** and others) which are fixed to the side sills **2** by welding. The left-side floor-panel joint portion **3b** is fixedly welded to a right-side portion of the left-side side sill **2.** The right-side floor-panel joint portion **3b** is fixedly welded to a left-side portion of the right-side side sill **2.**

A kick-up portion **5** which rises upward is arranged at a rear end of the floor panel **3.** A rear floor panel **6** expands rearward from the kick-up portion **5.** The rear floor panel 6 forms a floor face of a luggage room mainly.

Two cross members **60** extending in the lateral direction are arranged above the floor panel **3.** The two cross members **60** are aligned such that they are separated from each other in the longitudinal direction. A longitudinal position of the rear-side cross member **60** is the same as that of a center pillar, which is not illustrated. Hereinafter, the cross member **60** positioned at a relatively front side will be referred to as a front-side cross member **60a** and the cross member **60** positioned at a relatively rear side will be referred to as a rear-side cross member **60b** in some cases. In a case where these are not differentiated, an expression of the cross member **60** will be used.

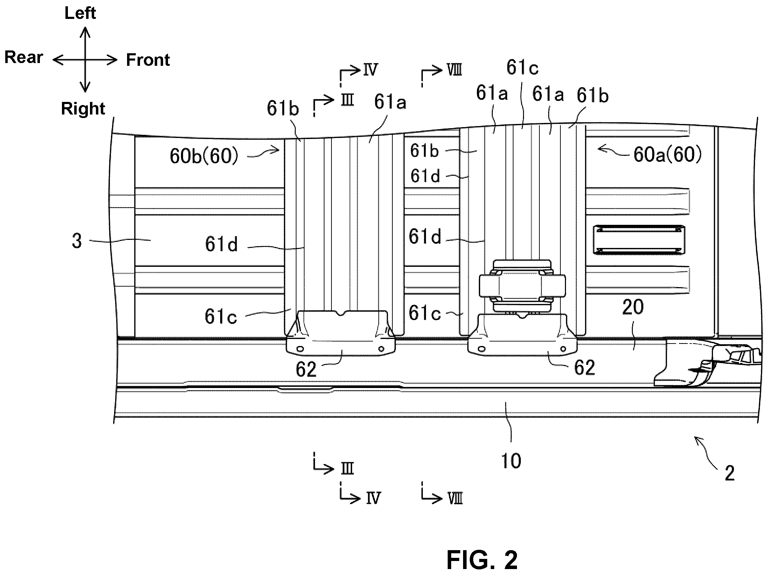

As shown in FIG. **2****,** the cross member **60** includes a cross-member body **61** and brackets **62.** The brackets **62** are fixed to both sides, in the lateral direction, of the cross-member body **61** (the right-side bracket **62** is shown in FIG. **2** only). The left-side bracket **62** is fixed to the left-side side sill **2** by welding, and the right-side bracket **62** is fixed to the right-side side sill **2** by welding. Thereby, the both-side end portions, in the lateral direction, of the cross member **60** are fixed to the side sills **2.** A lower end of the cross-member body **61** is fixed to an upper face of the floor panel **3.**

The cross-member body **61** has a cross section which is of a M-letter shape. The cross-member body **61** comprises two upper face portions **61a,** four side face portions **61b,** and a joint face portion **61c** which is joined to the floor panel **3.** A cross-member ridgeline portion **61d** extending in the lateral direction is formed between the upper face portion **61a** and the side face portion **61b** and also between the joint face portion **61c** and the side face portion **61b.**

As shown in FIG. **3****,** a battery **B** is arranged below the floor panel **3.** The battery **B** is arranged in a state where it is stored in a battery case **70.** The battery **B** is provided in a range which overlaps a roughly whole part of the floor panel **3** in a plan view.

The battery **B** is supported at lower wall portions (inner lower-wall portions **22** described later) of the side sills **2** together with the battery case **70** via support portions **80.** Specifically, a bracket **71** extending outward, in the vehicle width direction, of a vehicle body is fixed to an outward portion, in the vehicle width direction, (to a right-side portion in FIG. **3**) of the battery case **70.** A bolt **81** is inserted into an outward-side end portion, in the vehicle width direction, (into a right-side end portion in FIG. **3**) of the bracket **71.** The bolt **81** is supposed to engage with a nut **82** which is fixed to a portion inside the closed-cross section of the inner lower-wall portion **22** of the side sill **2.** The bolt **81** is inserted into the bracket **71** from below and fixed by the nut **82.** Thereby, the battery **B** is supported at the side sills **2** via the battery case **70** and the brackets **71.** The bolt **81** and the nut **82** constitute a support portion **80.** A bush **72** is arranged around the bolt **81** between the bracket **71** and the inner lower-wall portion **22.** The bush **72** is made of a resilient member.

### (2) Side Sill

Hereafter, a structure of the side sill **2** will be described specifically. As described above, since the vehicle-body structure of the vehicle **1** is laterally symmetrical, the structure of the right-side side sill **2** will be described specifically, and specific description of the left-side side sill **2** is omitted here. Further, in the description of the right-side side sill **2,** the right side corresponds to the outward side, in the vehicle width direction, of the vehicle body and the left side corresponds to the inward side, in the vehicle width direction, of the vehicle body.

### (2-1) Outer Panel, Inner Panel

As shown in FIG. **3****,** the side sill **2** includes an outer panel **10** positioned on the right side relatively and an inner panel **20** positioned on the left side relatively. A material of the outer panel **10** and the inner panel **21** is not limited to a particular one, but iron is applicable, for example.

The outer panel **10** has a hat-shaped cross section which is open to the left side. The outer panel **10** comprises an outer upper-wall portion **11** which expands in the longitudinal direction and in the lateral direction, an outer lower-wall portion **12** which is provided to face the outer upper-wall portion **11** in a vertical direction and expands in the longitudinal direction and in the lateral direction, and an outer side-wall portion **13** which connects, in the vertical direction, a right-side end portion of the outer upper-wall portion **11** and a right-side end portion of the outer lower-wall portion **12** and expands in the vertical direction and in the longitudinal direction. A pair of outer flanges **14** extend in the vertical direction from a left-side end portion of the outer upper-wall portion **11** and a left-side wall portion of the outer lower-wall portion **12,** respectively. The outer upper-wall portion **11** is inclined such that it extends obliquely rightward-and-downward. The outer lower-wall portion **12** is inclined such that it extends obliquely rightward-and-upward. The left-side end portion of the outer upper-wall portion **11** is positioned on the right side of the left-side end portion of the outer lower-wall portion **12.**

The inner panel **20** has a hat-shaped cross section which is open to the right side. The inner panel **20** comprises an inner upper-wall portion **21** which expands in the longitudinal direction and in the lateral direction, an inner lower-wall portion **22** which is provided to face the inner upper-wall portion **21** in the vertical direction and expands in the longitudinal direction and in the lateral direction, and an inner side-wall portion **23** which connects, in the vertical direction, a left-side end portion of the inner upper-wall portion **21** and a left-side end portion of the inner lower-wall portion **22** and expands in the vertical direction and in the longitudinal direction. A pair of inner flanges **24** extend in the vertical direction from a right-side end portion of the inner upper-wall portion **21** and a right-side wall portion of the inner lower-wall portion **22,** respectively. The inner upper-wall portion **21** is inclined such that it extends obliquely leftward-and-downward. The inner lower-wall portion **22** extends straightly in the lateral direction. The inner lower-wall portion **22** has an insertion hole of the bolt **81.**

The outer flanges **14** of the outer panel **10** and the inner flanges **24** of the inner panel **20** are provided to overlap each other in a state where their openings face each other in the lateral direction. The outer flanges **14** and the inner flanges **24** are j oined by welding. Thereby, the side sill **2** has the structure having the rectangular-shaped closed-cross section which is formed by the outer upper-wall portion **11,** the outer lower-wall portion **12,** the outer side-wall portion **13,** the inner upper-wall portion **21,** the inner lower-wall portion **22,** and the inner side-wall portion **23.**

The floor panel **3** and the cross member **60** are fixed to the inner panel **20.** Specifically, as shown in FIG. **3****,** the floor-panel joint portion **3b** of the floor panel **3** is formed by a right-side end portion of the floor panel body **3a** which is bent upward, and extends along the inner side-wall portion **23** and is joined to a left-side face of the inner side-wall portion **23.** The bracket **62** of the cross member **60** is provided to cover a corner portion between the inner upper-wall portion **21** and the inner side-wall portion **23.** The bracket **62** has a portion for welding which extends continuously along the inner upper-wall portion **21.** This welding portion is joined to the inner upper-wall portion **21.** Herein, FIG. **3** shows a fixation structure of the rear-side cross member **60** and the inner panel **20.** The fixation structure of the front-side cross member **60** and the inner panel **20** are the same as the fixation structure of the rear-side cross member **60** and the inner panel **20.**

### (2-2) Reinforcement

As shown in FIG. **3****,** a reinforcement **7** to reinforce the side sill **2** is arranged inside the closed-cross section of the side sill **2.** The reinforcement **7** is formed by pressing of a pipe. The reinforcement **7** extends in the longitudinal direction inside the closed-cross section of the side sill **2.** The reinforcement **7** is arranged at a position which overlaps the two cross members 60 in the vertical direction. The material strength of the reinforcement **7** is lower than that of the cross-member body **61.** Herein, the material strength means the strength of a plate itself which constitutes the member. The material strength is a parameter to be determined by the tensional strength and the thickness of the plate, for example. The higher the tensional strength is, the higher the material strength is. Also, the larger the thickness is, the higher the material strength is. The material of the reinforcement **7** is not limited to a particular one, but it is iron, for example.

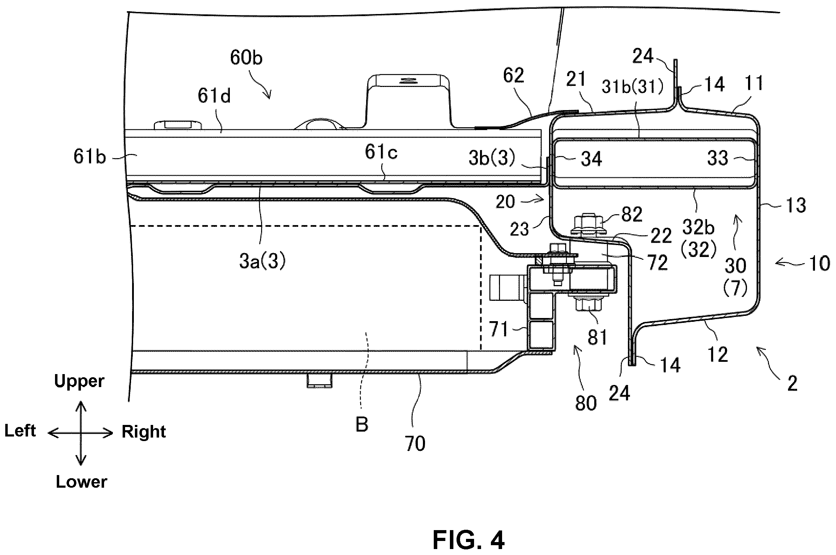

As shown in FIG. **4****,** the reinforcement **7** has a first area portion **30** which overlaps the cross members **60** in the longitudinal direction and a second area portion **50** which does not overlap the cross members **60** in the longitudinal direction. The first area portion **30** and the second area portion **50** are different from each other in the structure. The first area portion **30** and the second area portion **50** are made of a single member and integrally formed seamlessly.

### (2-2-1) First Area Portion

The first area portion **30** has a structure having a rectangular-shaped closed-cross section. The first area portion **30** includes a first upper-side lateral wall portion **31** which is positioned at a relatively upper side and expands in the longitudinal direction and in the lateral direction and a first lower-side lateral wall portion **32** which is provided to face the first upper-side lateral wall portion **31** in the vertical direction and expands in the longitudinal direction and in the lateral direction. The first area portion **30** includes a first outward-side vertical wall portion **33** which is positioned at a relatively right side and expands in the longitudinal direction and in the vertical direction and a first inward-side vertical wall portion **34** which is provided to face the first outward-side vertical wall portion **33** in the lateral direction and expands in the longitudinal direction and in the vertical direction. The first outward-side vertical wall portion **33** connects, in the vertical direction, a right-side end portion of the first upper-side lateral wall portion **31** and a right-side end portion of the first lower-side lateral wall portion **32.** The first inward-side vertical wall portion **34** connects, in the vertical direction, a left-side end portion of the first upper-side lateral wall portion **31** and a left-side end portion of the first lower-side lateral wall portion **32.** The first upper-side lateral wall portion **31,** the first lower-side lateral wall portion **32,** the first outward-side vertical wall portion **33,** and the first inward-side vertical wall portion **34** are made of a single member and formed integrally seamlessly.

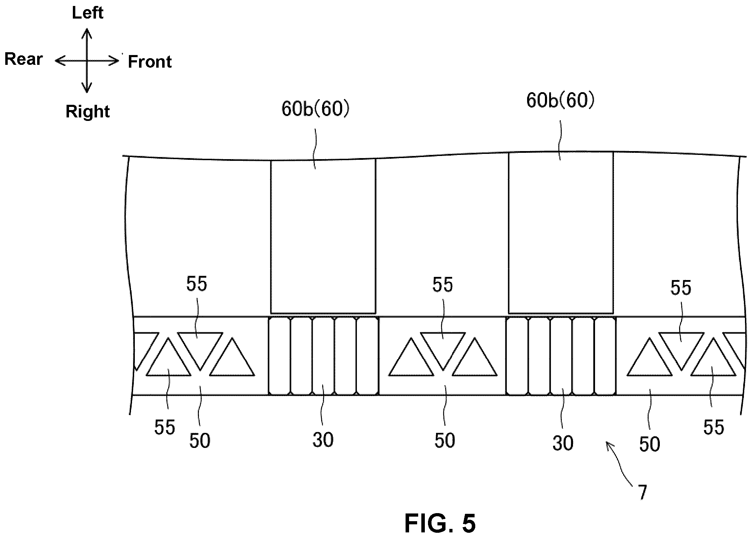

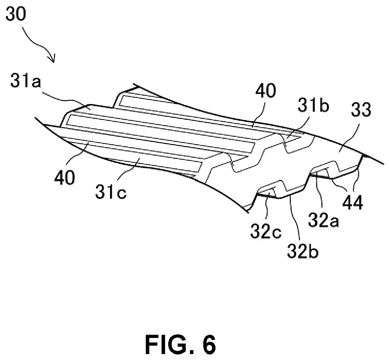

As shown in FIGS. **5** and **6****,** the first upper-side lateral wall portion **31** is of an uneven (concave-and-convex) shape when viewed in the lateral direction. Specifically, the first upper-side lateral wall portion **31** comprises a first upper-face portion **31a** which is relatively positioned at an upper side and expands in the longitudinal direction and in the lateral direction, a second upper-face portion **31b** which is relatively positioned at a lower side and expands in the longitudinal direction and in the lateral direction, and an upper-side connection portion **31c** which connects, in the vertical direction, an end portion, in the longitudinal direction, of the first upper-face portion **31a** and an end portion, in the longitudinal direction, of the second upper-face portion **31b.** The first upper-face portion **31a** and the second upper-face portion **31b** are aligned in the longitudinal direction alternately. The upper-side connection portion **31c** to connect the front-side end portion of the first upper-face portion **31a** and the rear-side end portion of the second upper-face portion **31b** is inclined such that it expands obliquely forward-and-downward. The upper-side connection portion **31c** to connect the rear-side end portion of the first upper-face portion **31a** and the front-side end portion of the second upper-face portion **31b** is inclined such that it expands obliquely forward-and-upward. The width, in the longitudinal direction, of the first upper-face portion **31a** is the same as the width, in the longitudinal direction, of the second upper-face portion **31b.** The width, in the longitudinal direction, of the first upper-face portion **31a** and the second upper-face portion **31b** is narrower than the width, in the longitudinal direction, of the cross member **60** and the minimum of a distance between the pair of cross members **60.** Specifically, the width, in the longitudinal direction, of the first upper-face portion **31a** and the second upper-face portion **31b** is narrower than a half of the width, in the longitudinal direction, of the cross member **60** and also narrower than a half of the minimum of the distance between the pair of cross members **60.** The length, in the vertical direction, of the upper-side connection portion **31c,** i.e., the distance, in the vertical direction, of the first upper-face portion **31a** and the second upper-face portion **31b** is about 1/4 of the distance between the upper-side lateral wall portion **31** and the lower-side lateral wall portion **32.**

First upper-side ridgeline portions **40** extending in the lateral direction are formed between the first upper-face portion **31a** and the upper-side connection portion **31c** and between the second upper-face portion **31b** and the upper-side connection portion **31c,** respectively. The four first upper-side ridgeline portions **40** are formed by one-cycle uneven shape comprising the first upper-face portion **31a,** the second upper-face portion **31b,** and the upper-side connection portions **31c.** The cycle-number of the uneven shape multiplied by four equals the number of the first upper-side ridgeline portions **40** which are formed at the first upper-side lateral wall portion **31** as a whole.

The vertical position of the first upper-face portion **31a** is the same as the vertical position of the upper face portion **61a** of the cross member 60. Accordingly, the first upper-side ridgeline portion **40** has the same vertical position as the upper-side cross-member ridgeline portion **61d.** Further, the first upper-side ridgeline portion **40** has the same longitudinal position as the upper-side cross-member ridgeline portion **61d.**

As shown in FIGS. **5** and **6****,** the first lower-side lateral wall portion **32** is of an uneven (concave-and-convex) shape when viewed in the lateral direction. Specifically, the first lower-side lateral wall portion **32** comprises a first lower-face portion **32a** which is relatively positioned at an upper side and expands in the longitudinal direction and in the lateral direction, a second lower-face portion **32b** which is relatively positioned at a lower side and expands in the longitudinal direction and in the lateral direction, and a lower-side connection portion **32c** which connects, in the vertical direction, an end portion, in the longitudinal direction, of the first lower-face portion **32a** and an end portion, in the longitudinal direction, of the second lower-face portion **32b.** The first lower-face portion **32a** and the second lower-face portion **32b** are aligned in the longitudinal direction alternately. The lower-side connection portion **32c** to connect the front-side end portion of the first lower-face portion **32a** and the rear-side end portion of the second lower-face portion **32b** is inclined such that it expands obliquely forward-and-downward. The lower-side connection portion **32c** to connect the rear-side end portion of the first lower-face portion **32a** and the front-side end portion of the second lower-face portion **32b** is inclined such that it expands obliquely forward-and-upward. The width, in the longitudinal direction, of the first lower-face portion **32a** is the same as the width, in the longitudinal direction, of the second lower-face portion **32b.** The width, in the longitudinal direction, of the first lower-face portion **32a** and the second lower-face portion **32b** is the same as the width, in the longitudinal direction, of the first upper-face portion **31a** and the second upper-face portion **31b.** The vertical length of the lower-side connection portion **32c,** i.e., the distance, in the vertical direction, between the first lower-face portion **32a** and the second lower-face portion **32b** is the same as the vertical distance between the first upper-face portion **31a** and the second upper-face portion **31b.**

First lower-side ridgeline portions **44** extending in the lateral direction are formed between the first lower-face portion **32a** and the lower-side connection portion **32c** and between the second lower-face portion **32b** and the lower-side connection portion **32c,** respectively. The four first lower-side ridgeline portion **44** are formed by one-cycle uneven shape comprising the first lower-face portion **32a,** the second lower-face portion **32b,** and the lower-side connection portions **32c.** The cycle-number of the uneven shape multiplied by four equals the number of the first lower-side ridgeline portions **44** which are formed at the first lower-side lateral wall portion **32** as a whole.

As shown in FIG. **4****,** the vertical position of the second lower-face portion **32b** is the same as the vertical position of the floor panel body **3a.** Accordingly, the vertical position of the first lower-side ridgeline **44** is the same as the vertical position of the floor panel body **3a.** Further, the vertical position of the second lower-face portion **32b** is slightly below the joint face portion **61c** of the cross-member body **61.** Accordingly, the first lower-side ridgeline portion **44** is positioned slightly below the lower-side cross-member ridgeline portion **61d.**

As shown in FIG. **6****,** the longitudinal position of the first upper-face portion **31a** is the same as the longitudinal position of the first lower-face portion **32a.** The longitudinal position of the second upper-face portion **31b** is the same as the longitudinal position of the second lower-face portion **32b.** The longitudinal position of the first upper-side ridgeline portion **40** is the same as the longitudinal position of the first lower-side ridgeline portion **44.** Further, the vertical distance between the first upper-face portion **31a** and the first lower-face portion **32a,** the vertical distance between the second upper-face portion **31b** and the second lower-face portion **32b,** and the vertical distance between the upper-side connection portion **31c** and the lower-side connection portion **32c** are the same.

The first outward-side vertical wall portion **33** and the first inward-side vertical wall portion **34** have the shape corresponding to the uneven shape of the first upper-side lateral wall portion **31** and the first lower-side lateral wall portion **32.** The first outward-side vertical wall portion **33** is fixed to the outer side-wall portion **13.** The first inward-side vertical wall portion **34** is fixed to the inner side-wall portion **23.** The respective fixation methods between the first outward-side vertical wall portion **33** and the outer side-wall portion **13** and between the first inward-side vertical wall portion **34** and the inner side-wall portion **23** are not limited to a particular one, but welding, adhesion by an adhesive agent, bolt fastening or the like are applicable, for example.

An area of the closed-cross section which is formed by the first upper-side lateral wall portion **31,** the first lower-side lateral wall portion **32,** the first outward-side vertical wall portion **33,** and the first inward-side vertical wall portion **34** does not change in the longitudinal direction.

### (2-2-2) Second Area

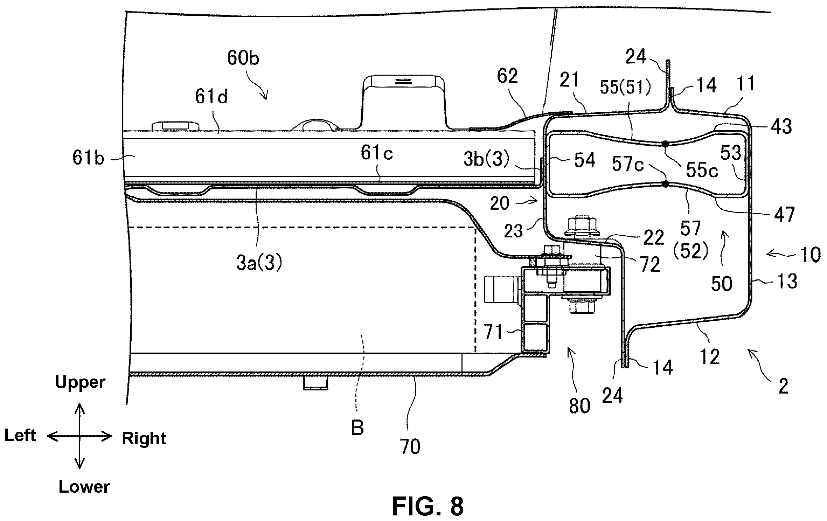

As shown in FIG. **8****,** the second area portion **50** has a structure having a rectangular closed-cross section. The second area portion **50** includes a second upper-side lateral wall portion **51** which is positioned at a relatively upper side and expands in the longitudinal direction and in the lateral direction and a second lower-side lateral wall portion **52** which is provided to face the second upper-side lateral wall portion **51** in the vertical direction and expands in the longitudinal direction and in the lateral direction. The second area portion **50** includes a second outward-side vertical wall portion **53** which is positioned at a relatively right side and expands in the longitudinal direction and in the vertical direction and a second inward-side vertical wall portion **54** which is provided to face the second outward-side lateral wall portion **53** in the lateral direction and expands in the longitudinal direction and in the vertical direction. The second outward-side vertical wall portion **53** connects respective right-side end portions of the second upper-side lateral wall portion **51** and the second lower-side lateral wall portion **52** in the vertical direction. The second inward-side vertical wall portion **54** connects respective left-side end portions of the second upper-side lateral wall portion **51** and the second lower-side lateral wall portion **52** in the vertical direction. These portions **51, 52, 53, 54** are made of a single member and integrally formed seamlessly. Further, between the first area portion **30** and the second area portion **50,** the upper-side lateral portions **31, 51,** the lower-side lateral wall portions **32, 52,** the outward-side vertical wall portions **33, 53,** and the inward-side vertical wall portions **34, 54** are integrally formed seamlessly.

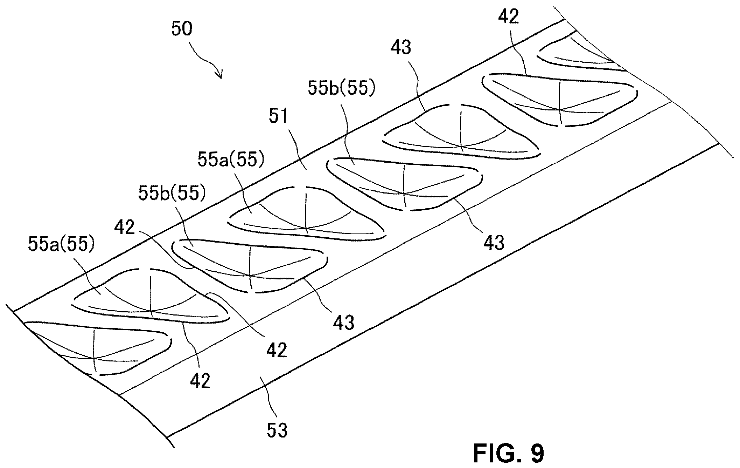

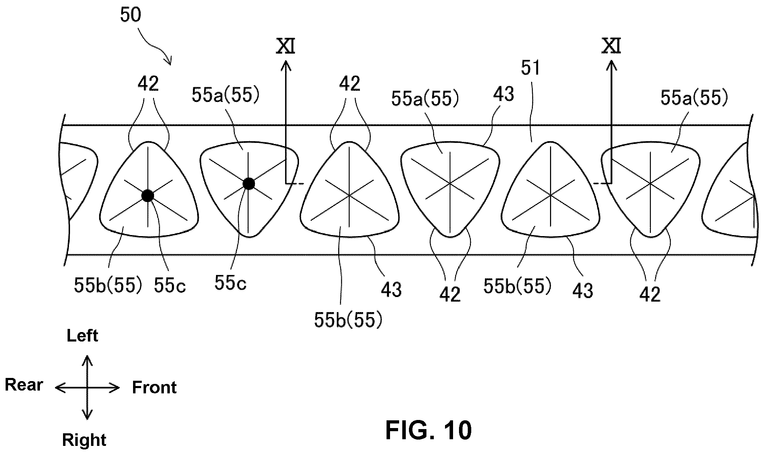

As shown in FIGS. **9** and **10****,** the second upper-side lateral wall portion **51** has plural upper-side beads **55.** The upper-side bead **55** is configured to be recessed downward and has an arc shape. The upper-side bead **55** comprises a first upper-side bead **55a** which is of a triangular shape in the plan view and a second upper-side bead **55b** which is of the triangular shape in the plan view and has a different facing direction, in the lateral direction, from the first upper-side bead **55a.** The first upper-side bead **55a** and the second upper-side bead **55b** are aligned, in the longitudinal direction, alternately. Hereafter, these beads **55a, 55b** will be simply referred to as the upper-side bead **55** when these are not differentiated.

An apex portion **55c** of the upper-side bead **55** which is located at a lowermost position is positioned at a center of gravity of the upper-side bead **55.** The position of the apex portion **55c** is different between the first upper-side bead **55a** and the second upper-side bead **55b.** The apex portion **55c** of the first upper-side bead **55a** is positioned on the right side of that of the second upper-side bead **55b.**

Two of three sides which form a peripheral edge portion of the upper-side bead **55** are second upper-side ridgeline portions **42** which extend in the lateral direction. Each of the second upper-side ridgeline portions **42** extends longitudinally such that it is inclined relative to the lateral direction. Further, the rest of the three sides of the upper-side bead **55** is a third upper-side ridgeline portion **43** which extends in the longitudinal direction.

The maximum width, in the longitudinal direction, of the upper-side bead **55** is about one third (1/3) of the minimum value of a distance between the front-side cross member **60a** and the rear-side cross member **60b.**

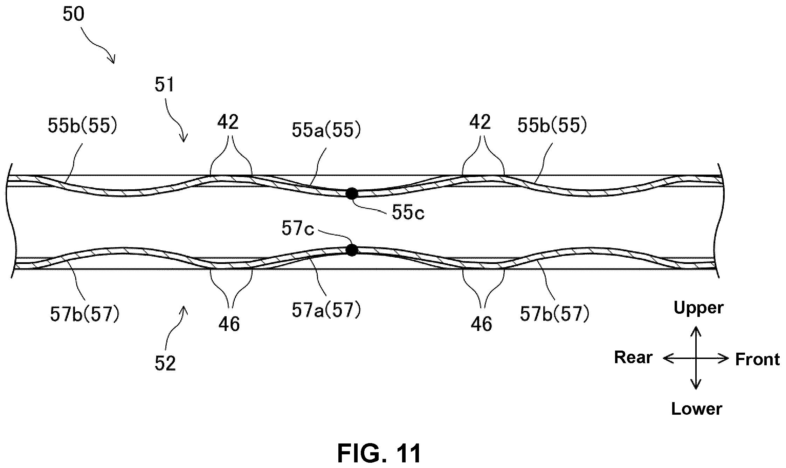

As shown in FIG. **11****,** the second lower-side lateral wall portion **52** has plural lower-side beads **57.** The lower-side bead **57** is configured to be recessed upward and has an arc shape. The lower-side bead **57** comprises a first lower-side bead **57a** which is of a triangular shape in the plan view and a second lower-side bead **57b** which is of the triangular shape in the plan view and has a different facing direction, in the lateral direction, from the first lower-side bead **57a.** The first lower-side bead **57a** and the second lower-side bead **57b** are aligned, in the longitudinal direction, alternately. Hereafter, these beads **57a, 57b** will be simply referred to as the lower-side bead **57** when these are not differentiated.

The lower-side bead **57** is located at the same position, in the longitudinal direction and in the lateral direction, as the upper-side bead **55.** Specifically, the first lower-side bead **57a** is located at the same position, in the longitudinal direction and in the lateral direction, as the first upper-side bead **55a.** The second lower-side bead **57b** is located at the same position, in the longitudinal direction and in the lateral direction, as the second upper-side bead **55b.** That is, the upper-side beads **55** and the lower-side beads **57** overlap each other in the plan view.

An apex portion **57c** of the lower-side bead **57** which is located at an uppermost position is positioned at a center of gravity of the lower-side bead **57.** The position of the apex portion **57c** is different between the first lower-side bead **57a** and the second lower-side bead **57b.** The apex portion **57c** of the first lower-side bead **57a** is positioned on the right side of that of the second lower-side bead **57b.** As shown in FIG. **11****,** the apex portion **57c** of the first lower-side bead **57a** is located at the same position, in the longitudinal direction and in the lateral direction, at the apex portion **55c** of the first upper-side bead **55a.** The apex portion **57c** of the second lower-side bead **57b** is located at the same position, in the longitudinal direction and in the lateral direction, as the apex portion **57c** of the second lower-side bead **57b.** That is, the apex portion **55c** of the upper-side bead **55** and the apex portion **57c** of the lower-side beads **57** overlap each other in the plan view.

As shown in FIG. **11****,** two of three sides which form a peripheral edge portion of the lower-side bead **57** are second lower-side ridgeline portions **46** which extend in the lateral direction. Each of the second lower-side ridgeline portions **46** extends longitudinally such that it is inclined relative to the lateral direction. Further, as shown in FIG. **8****,** the rest of the three sides of the lower-side bead **57** is a third lower-side ridgeline portion **47** which extends in the longitudinal direction.

The maximum width, in the longitudinal direction, of the lower-side bead **57** is about one third (1/3) of the minimum value of a distance between the front-side cross member **60a** and the rear-side cross member **60b.**

The surface stiffness (rigidity) of the second upper-side lateral wall portion **51** and the second lower-side lateral wall portion **52** is made relatively large (high) by the upper-side bead **55** and the lower-side bead **57,** compared to the first upper-side lateral wall portion **31** and the first lower-side lateral wall portion **32.**

The second outward-side vertical wall portion **53** and the second inward-side vertical wall portion **54** extend straightly in the longitudinal direction and in the vertical direction. The second outward-side vertical wall portion **53** is fixed to the outer side-wall portion **13.** The second inward-side vertical wall portion **54** is fixed to the inner side-wall portion **23.** The respective fixation methods between the second outward-side vertical wall portion **53** and the outer side-wall portion **13** and between the second inward-side vertical wall portion **54** and the inner side-wall portion **23** are not limited to a particular one, but welding, adhesion by an adhesive agent, bolt fastening or the like are applicable, for example.

### (3) Operation (Movement) in Vehicle Side Collision

When a collision object hits against the position of the first area portion **30,** a collision load is transmitted to the cross member **60** via the first area portion **30,** and received at the cross member **60.** Further, the first upper-side ridgeline portion **40** and the first lower-side ridgeline portion **44** at the first area portion **30** near the collision object are compressively deformed, so that the collision load is absorbed. Accordingly, in a case where a pole-side collision occurs at the position of the first area portion **30,** the collision load can be absorbed properly.

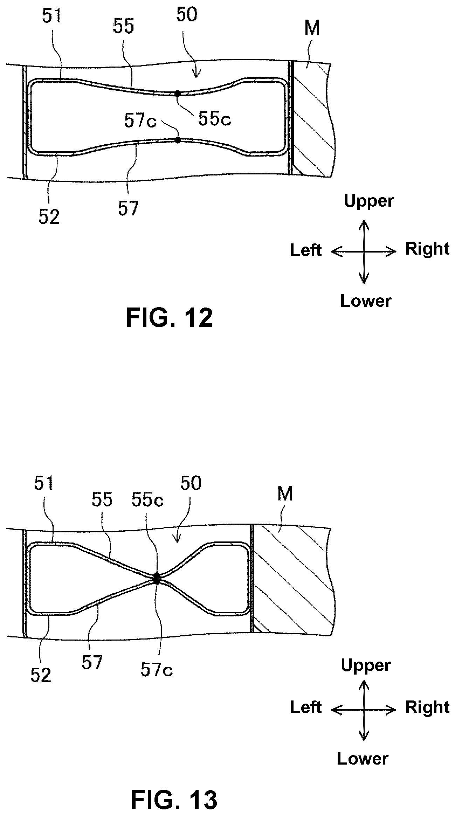

As shown in FIG. **12****,** when a collision object **M** collides with the second area portion **50,** the deformation of the second upper-side lateral wall portion **51** and the second lower-side lateral wall portion **52** is suppressed by the upper-side bead **55** and the lower-side bead **57.** Thereby, the reinforcement 7 moves inward, in the vehicle width direction, of the vehicle body as a whole. Thus, the collision load is transmitted to the cross member **60** via the second area portion **50** and the first area portion **30.**

As shown in FIG. **13****,** as the collision object **M** further comes in, the second area portion **50** is deformed by the collision load. Herein, the upper-side bead **55** is deformed such that it protrudes downward, and the lower-side bead **57** is deformed such that it protrudes upward. Since the apex portion **55c** of the upper-side bead **55** and the apex portion **57c** of the lower-side bead **57** overlap each other in the plan view, the upper-side bead **55** and the lower-side bead **57** contact each other by the above-described deformation. Once the upper-side bead **55** and the lower-side bead **57** contract each other, the second area portion **50** is not deformed easily. Accordingly, even if the second upper-side lateral wall portion **51** and the second lower-side lateral **52** start the deformation, the collision load can be transmitted to the cross member **60.** Accordingly, even when the pole-side collision occurs at the second area portion **50,** the collision load can be absorbed properly.

### (4) Effects of Embodiment

In the present embodiment, the reinforcement **7** includes the first upper-side lateral wall portion **31,** the first lower-side lateral wall portion **32,** the second upper-side lateral wall portion **51,** and the second lower-side lateral wall portion **52** which expand in the vehicle longitudinal direction and in the vehicle width direction, has the first area portion **30** which overlaps the cross members **60** in the vehicle longitudinal direction and the second area portion **50** which does not overlap the cross members **60** in the vehicle longitudinal direction, and the surface stiffness (rigidity) of the second upper-side lateral wall portion **51** and the second lower-side lateral wall portion **52** at the second area portion **50** is larger than that of the first upper-side lateral wall portion **31** and the first lower-side lateral wall portion **32** at the first area portion **30.** According to the present embodiment, when the pole-side collision occurs at the first area portion **30,** the collision load can be efficiently transmitted to the cross member **60** by the first area portion **30.** Meanwhile, when the pole-side collision occurs at the second area portion **50,** the absorption amount of the collision load can be improved by the second upper-side lateral wall portion **51** and the second lower-side lateral wall portion **52** which have the relatively-large surface stiffness (rigidity). Further, since the first upper-side lateral wall portion **31,** the first lower-side lateral wall portion **32,** the second upper-side lateral wall portion **51,** and the second lower-side lateral wall portion **52** are merely provided, the increase of the vehicle-body weight can be suppressed. Accordingly, the present embodiment can properly improve the absorption amount of the collision load in the vehicle side collision, suppressing the increase of the vehicle-body weight.

In particular, in the present embodiment, the battery case **70** which stores the battery **B** is arranged below the floor panel **3.** By improving the absorption amount of the collision load at the side sill **2** and the cross member **60,** the load transmission to the battery case **70** and the battery **B** can be suppressed. In the present embodiment, breakage of the battery case **70** and the battery **B** can be suppressed.

In the embodiment of the present embodiment, the second upper-side lateral wall portion **51** and the second lower-side lateral wall portion **52** have the arc-shaped second upper-side and lower-side beads **55, 57** which protrude in the vertical direction. Thereby, the surface stiffness can be increased by these beads **55, 57.** Further, the weight increase of the lateral wall portions **51, 52** is properly small even if these beads are formed. Accordingly, the present embodiment can properly improve the absorption amount of the collision load in the vehicle side collision, suppressing the increase of the vehicle-body weight.

In the present embodiment, the second upper-side lateral wall portion **51** and the second lower-side lateral wall portion **52** have the second upper-side ridgeline portions **42** and the second lower-side ridgeline portions **46** which extend in the vehicle width direction. Thereby, the surface stiffness can be increased by these ridgeline portions **42, 46.** Further, the weight increase of the lateral wall portions **51, 52** is small even if these ridgeline portions **42, 46** are formed. Accordingly, the present embodiment can properly improve the absorption amount of the collision load in the vehicle side collision, suppressing the increase of the vehicle-body weight.

Further, in the present embodiment, the second upper-side lateral wall portion **51** and the second lower-side lateral wall portion **52** have the third upper-side ridgeline portions **43** and the third lower-side ridgeline portions **47** which extend in the vehicle longitudinal direction. Thereby, the bending deformation of the second area portion **50** can be suppressed. Accordingly, the present embodiment can improve the absorption amount of the collision load in the vehicle side collision.

In the present embodiment, the upper-side bead **55** is configured to be recessed downward, the lower-side bead **57** is configured to be recessed upward, and the upper-side bead **55** and the lower-side bead **57** overlap each other in the plan view. Accordingly, when the second upper-side lateral wall portion **51** and the second lower-side lateral wall portion **52** are deformed in the vehicle side collision, the upper-side bead **55** is deformed such that it protrudes downward and the lower-side bead **57** is deformed such that it protrudes upward. The upper-side bead **55** and the lower-side bead **57** contact each other due to their deformations. Thereby, the compressive deformation of the lateral wall portions **51, 52** does not occur easily, so that the absorption amount of the collision load is improved. Accordingly, the present embodiment can improve the absorption amount of the collision load in the vehicle side collision.

In the present embodiment, the apex portion **55c** of the upper-side bead **55** and the apex portion **57c** of the lower-side bead **57** overlap each other in the plan view. Thereby, since the minimum value of the distance between the upper-side bead **55** and the lower-side bead **57** can be made properly small (narrow), the both beads **55, 57** contact each other in an early stage in the vehicle side collision. Accordingly, the present embodiment can improve the absorption amount of the collision load in the vehicle side collision.

In the present embodiment, each of the upper-side bead **55** and the lower-side bead **57** is of the triangular shape in the plan view. Thereby, these beads **55, 57** can be arranged closely. Accordingly, the present embodiment can improve the absorption amount of the collision load in the vehicle side collision.

In the present embodiment, the first upper-side lateral wall portion **31** and the first lower-side lateral wall portion **32** have the first upper-side ridgeline portion **40** and the first lower-side ridgeline portion **44** which extend in the vehicle width direction. Since the rigidity of the first area portion **30** against the collision load applied in the vehicle width direction is increased by these ridgeline portions **40, 44,** the collision load can be efficiently transmitted to the cross member **60.** Further, since the ridgeline portions **31, 32** are compressively deformed, the collision load can be absorbed. Also, since the ridgeline portions **31, 32** can be formed just by the bending process, forming of the ridgeline portions **31, 32** does not increase the weight of the first upper-side and lower-side lateral wall portions **31, 32** very much. Accordingly, the present embodiment can improve the absorption amount of the collision load in the vehicle side collision, suppressing the vehicle-body weight.

In the present embodiment, the second upper-side lateral wall portion **51,** the second lower-side lateral wall portion **52,** the second outward-side vertical wall portion **53,** and the second inward-side vertical wall portion **54** are integrated. Since the bending deformation of the second upper-side and lower-side lateral wall portions **51, 52** can be suppressed by the second upper-side and lower-side vertical wall portions **53, 54,** the present embodiment can improve the absorption amount of the collision load in the vehicle side collision.

### (Other Embodiments)

The present invention is not limited to the above-described embodiment, and any modifications are applicable within the claims of the present invention.

While the surface stiffness of the second upper-side lateral wall portion **51** and the second lower-side lateral wall portion **52** is increased more than that of the first upper-side lateral wall portion **31** and the first lower-side lateral wall portion **32** by providing the beads in the above-described embodiment, the material strength of the second upper-side lateral wall portion **51** and the second lower-side lateral wall portion **52** may be increased more than that of the first upper-side lateral wall portion **31** and the first lower-side lateral wall portion **32,** for example. Further, the surface stiffness of these portions **51, 52** may be increased by forming flanges at respective both-side end portions, in the lateral direction, of these portions **51, 52** so as to constitute an I-shaped closed-cross-section structure.

While the second area portion **50** comprises the two lateral wall portions of the second upper-side lateral wall portion **51** and the second lower-side lateral wall portion **52** in the above-described embodiment, the single lateral wall portion can be provided only by arranging this lateral wall portion at a position which overlaps the cross member **60** in the vertical direction.

While both of the second upper-side and lower-side lateral wall portions **51, 52** have the beads in the above-described embodiment, the bead may be formed at the second upper-side lateral wall portion **51** only.

While the upper-side bead **55** is configured to be recessed downward and the lower-side bead **57** is configured to be recessed upward in the above-described embodiment, the upper-side bead **55** may be configured to be recessed upward and the lower-side bead **57** may be configured to be recessed downward.

While the second area portion **50** comprises the second outward-side vertical wall portion **53** and the second inward-side vertical wall portion **54** in the above-described embodiment, these portions **53, 54** may be omitted.

While the bead is of the triangular shape in the plan view in the above-described embodiment, it may have a different shape, such as a rectangular shape or a hexagon shape, as long as it is of a polygonal shape in the plan view.

The above-described embodiment merely exemplifies the lower structure of the vehicle according to the present invention, and therefore the present invention is not limited by this embodiment. Any modifications which are specified in the claims and also construed under the doctrine of equivalents should be within the scope of the present invention.

The present invention described above is useful as the lower structure of the vehicle.

## Claims

1. A lower structure of a vehicle (1), comprising:
a pair of right-and-left side sills (2) extending in a vehicle longitudinal direction and having a closed-cross section;
cross members (60) extending in a vehicle width direction between the pair of side sills (2) and provided to be separated from each other in the vehicle longitudinal direction; and
a reinforcement (7) extending in the vehicle longitudinal direction inside the closed-cross section of each of the pair of side sills (2) at a position, in a vertical direction, thereof which overlaps the cross members (60) and reinforcing the side sill (2),
wherein said reinforcement (7) includes a lateral wall portion (31, 32, 51, 52) expanding in the vehicle longitudinal direction and in the vehicle width direction, has a first area portion (30) which overlaps said cross members (60) in the vehicle longitudinal direction and a second area portion (50) which does not overlap the cross members (60) in the vehicle longitudinal direction, **characterised in that** the surface stiffness of said lateral wall portion (51, 52) at said second area portion (50) is larger than that of said lateral wall portion (31, 32) at said first area portion (30).

2. The lower structure of the vehicle of claim 1, wherein said lateral wall portion (51, 52) at said second area portion (50) has an arc-shaped bead (55, 57) which protrudes in the vertical direction.

3. The lower structure of the vehicle (1) of claim 1 or 2, wherein said lateral wall portion (51, 52) at said second area portion (50) has a ridgeline portion (43, 47) which extends in the vehicle width direction.

4. The lower structure of the vehicle (1) of any of the preceding claim 2 or 3, wherein said lateral wall portion (51, 52) comprises an upper-side lateral wall portion (51) which is provided at a relatively upper side and a lower-side lateral wall portion (52) which is provided at a relatively lower side, and each of said upper-side lateral wall portion (51) and said lower-side lateral wall portion (52) at said second area portion (50) has said bead (55, 57).

5. The lower structure of the vehicle (1) of claim 4, wherein an upper-side bead (55) as said bead provided at said upper-side lateral wall portion (51) is configured to be recessed downward, a lower-side bead (57) as said bead provided at said lower-side lateral wall portion (52) is configured to be recessed upward, and said upper-side bead (55) and said lower-side bead (57) overlap each other in a plan view.

6. The lower structure of the vehicle (1) of claim 5, wherein an apex portion (55c) of said upper-side bead (55) and another apex portion (57c) of said lower-side bead (57) overlap each other in the plan view.

7. The lower structure of the vehicle (1) according to claim 5 or 6, wherein said upper-side bead (55) comprises a first upper-side bead (55a) and a second upper-side bead (55b) and/or said lower-side bead (57) comprises a first lower-side bead (57a) and a second lower-side bead (57b), preferably the position of the apex portion (55c) is different between the first upper-side bead (55a) and the second upper-side bead (55b) and/or the position of the apex portion (57c) is different between the first lower-side bead (57a) and the second lower-side bead (57b).

8. The lower structure of the vehicle (1) of any of claims 2 to 7, wherein said bead (55, 57) is of a polygonal shape in a plan view.

9. The lower structure of the vehicle (1) of any of claims 2 to 7, wherein said bead (55, 57) is of a triangular shape or a rectangular shape in the plan view.

10. The lower structure of the vehicle (1) of any of claims 1 - 9, wherein said lateral wall portion (31, 32) at the first area portion (30) has a ridgeline portion (40, 44) which extends in the vehicle width direction.

11. The lower structure of the vehicle (1) according to claim 10, wherein at least one of the lateral wall portions (31, 32) at the first area portion (30) is of an uneven shape, in particular of a concave-and-convex shape, when viewed in the lateral direction.

12. The lower structure of the vehicle (1) according to claim 10 or 11, wherein said lateral wall portion (31, 32) at the first area portion (30) comprises a first flat-face portion (31a, 32a) located at a relatively upper side, a second flat-face portion (31b 32b) located at a relatively lower side, and a connection portion (31c, 32c) connecting said first flat-face portion (31a, 32a) and said second flat-face portion (31b, 32b) in the vertical direction, and said first ridgeline portions (40, 44) are positioned between said first flat-face portion (31a, 32a) and said connection portion (31c, 32c) and between said second flat-face portion (31b, 32b) and said connection portion.

13. The lower structure of the vehicle (1) of any of claims 1 to 12, wherein said lateral wall portion (31, 32, 51, 52) comprises an upper-side lateral wall portion (31, 51) which is provided at a relatively upper side and a lower-side lateral wall portion (32, 52) which is provided at a relatively lower side, said reinforcement (7) further includes a pair of right-and-left vertical wall portion (33, 34, 53, 54) which connect respective right-side end portions of said upper-side lateral wall portion (31, 51) and said lower-side lateral wall portion (32, 52) and respective left-side end portions of said upper-side lateral wall portion (31, 51) and said lower-side lateral wall portion (32, 52) in the vertical direction, and said upper-side lateral wall portion (31, 51), lower-side lateral wall portion (32, 52), and said pair of right-and-left vertical wall portions (33, 34, 53, 54) are integrated.

14. The lower structure of the vehicle (1) according to any of the preceding claims, wherein the first area portion (30) of the reinforcement (7) and the second area portion (50) of the reinforcement (50) are made of a single member and integrally formed seamlessly.

15. A vehicle (1) including a lower structure according to any of the preceding claims.

## Patentansprüche

1. Untere Struktur eines Fahrzeugs (1), umfassend:
ein Paar aus rechtem und linkem Seitenschweller (2), das sich in einer Fahrzeuglängsrichtung erstreckt und einen geschlossenen Querschnitt aufweist;
Querträger (60), die sich in einer Fahrzeugbreitenrichtung zwischen dem Paar von Seitenschwellern (2) erstrecken und so vorgesehen sind, dass sie in der Fahrzeuglängsrichtung voneinander getrennt sind; und
eine Verstärkung (7), die sich in der Fahrzeuglängsrichtung innerhalb des geschlossenen Querschnitts jedes des Paars von Seitenschwellern (2) an einer Position desselben in einer vertikalen Richtung erstreckt, die die Querträger (60) überlappt, und den Seitenschweller (2) verstärkt,
wobei die Verstärkung (7) einen Seitenwandabschnitt (31, 32, 51, 52) aufweist, der sich in der Fahrzeuglängsrichtung und in der Fahrzeugbreitenrichtung erweitert, einen ersten Bereichsabschnitt (30), der die Querträger (60) in der Fahrzeuglängsrichtung überlappt, und einen zweiten Bereichsabschnitt (50), der die Querträger (60) in der Fahrzeuglängsrichtung nicht überlappt, aufweist, **dadurch gekennzeichnet, dass** die Oberflächensteifigkeit des Seitenwandabschnitts (51, 52) an dem zweiten Bereichsabschnitt (50) größer ist als diejenige des Seitenwandabschnitts (31, 32) an dem ersten Bereichsabschnitt (30).

2. Untere Struktur des Fahrzeugs nach Anspruch 1, wobei der Seitenwandabschnitt (51, 52) an dem zweiten Bereichsabschnitt (50) eine bogenförmige Sicke (55, 57) aufweist, die in der vertikalen Richtung vorsteht.

3. Untere Struktur des Fahrzeugs (1) nach Anspruch 1 oder 2, wobei der Seitenwandabschnitt (51, 52) an dem zweiten Bereichsabschnitt (50) einen Gratlinienabschnitt (43, 47) aufweist, der sich in der Fahrzeugbreitenrichtung erstreckt.

4. Untere Struktur des Fahrzeugs (1) nach einem der vorhergehenden Ansprüche 2 oder 3, wobei der Seitenwandabschnitt (51, 52) einen oberseitigen Seitenwandabschnitt (51), der an einer relativ oberen Seite vorgesehen ist, und einen unterseitigen Seitenwandabschnitt (52), der an einer relativ unteren Seite vorgesehen ist, umfasst, und jeder von dem oberseitigen Seitenwandabschnitt (51) und dem unterseitigen Seitenwandabschnitt (52) an dem zweiten Bereichsabschnitt (50) die Sicke (55, 57) aufweist.

5. Untere Struktur des Fahrzeugs (1) nach Anspruch 4, wobei eine oberseitige Sicke (55) als die an dem oberseitigen Seitenwandabschnitt (51) vorgesehene Sicke so konfiguriert ist, dass sie nach unten vertieft ist, eine unterseitige Sicke (57) als die an dem unterseitigen Seitenwandabschnitt (52) vorgesehene Sicke so konfiguriert ist, dass sie nach oben vertieft ist, und die oberseitige Sicke (55) und die unterseitige Sicke (57) einander in einer Draufsicht überlappen.

6. Untere Struktur des Fahrzeugs (1) nach Anspruch 5, wobei ein Scheitelabschnitt (55c) der oberseitigen Sicke (55) und ein weiterer Scheitelabschnitt (57c) der unterseitigen Sicke (57) einander in der Draufsicht überlappen.

7. Untere Struktur des Fahrzeugs (1) nach Anspruch 5 oder 6, wobei die oberseitige Sicke (55) eine erste oberseitige Sicke (55a) und eine zweite oberseitige Sicke (55b) umfasst und/oder die unterseitige Sicke (57) eine erste unterseitige Sicke (57a) und eine zweite unterseitige Sicke (57b) umfasst, vorzugsweise die Position des Scheitelabschnitts (55c) zwischen der ersten oberseitigen Sicke (55a) und der zweiten oberseitigen Sicke (55b) unterschiedlich ist und/oder die Position des Scheitelabschnitts (57c) zwischen der ersten unterseitigen Sicke (57a) und der zweiten unterseitigen Sicke (57b) unterschiedlich ist.

8. Untere Struktur des Fahrzeugs (1) nach einem der Ansprüche 2 bis 7, wobei die Sicke (55, 57) in einer Draufsicht von einer polygonalen Form ist.

9. Untere Struktur des Fahrzeugs (1) nach einem der Ansprüche 2 bis 7, wobei die Sicke (55, 57) in der Draufsicht von einer dreieckigen Form oder einer rechteckigen Form ist.

10. Untere Struktur des Fahrzeugs (1) nach einem der Ansprüche 1 - 9, wobei der Seitenwandabschnitt (31, 32) an dem ersten Bereichsabschnitt (30) einen Gratlinienabschnitt (40, 44) aufweist, der sich in der Fahrzeugbreitenrichtung erstreckt.

11. Untere Struktur des Fahrzeugs (1) nach Anspruch 10, wobei mindestens einer der Seitenwandabschnitte (31, 32) an dem ersten Bereichsabschnitt (30) bei Betrachtung in der Querrichtung von einer unebenen Form, insbesondere von einer konkav-konvexen Form, ist.

12. Untere Struktur des Fahrzeugs (1) nach Anspruch 10 oder 11, wobei der Seitenwandabschnitt (31, 32) an dem ersten Bereichsabschnitt (30) einen ersten Flachflächenabschnitt (31a, 32a), der an einer relativ oberen Seite angeordnet ist, einen zweiten Flachflächenabschnitt (31b 32b), der an einer relativ unteren Seite angeordnet ist, und einen Verbindungsabschnitt (31c, 32c), der den ersten Flachflächenabschnitt (31a, 32a) und den zweiten Flachflächenabschnitt (31b, 32b) in der vertikalen Richtung verbindet, umfasst, und die ersten Gratlinienabschnitte (40, 44) zwischen dem ersten Flachflächenabschnitt (31a, 32a) und dem Verbindungsabschnitt (31c, 32c) und zwischen dem zweiten Flachflächenabschnitt (31b, 32b) und dem Verbindungsabschnitt positioniert sind.

13. Untere Struktur des Fahrzeugs (1) nach einem der Ansprüche 1 bis 12, wobei der Seitenwandabschnitt (31, 32, 51, 52) einen oberseitigen Seitenwandabschnitt (31, 51), der an einer relativ oberen Seite vorgesehen ist, und einen unterseitigen Seitenwandabschnitt (32, 52), der an einer relativ unteren Seite vorgesehen ist, umfasst, die Verstärkung (7) ferner ein Paar aus rechtem und linkem vertikalen Wandabschnitt (33, 34, 53, 54) aufweist, die jeweilige rechtsseitige Endabschnitte des oberseitigen Seitenwandabschnitts (31, 51) und des unterseitigen Seitenwandabschnitts (32, 52) und jeweilige linksseitige Endabschnitte des oberseitigen Seitenwandabschnitts (31, 51) und des unterseitigen Seitenwandabschnitts (32, 52) in der vertikalen Richtung verbinden, und der oberseitige Seitenwandabschnitt (31, 51), der unterseitige Seitenwandabschnitt (32, 52) und das Paar aus rechtem und linkem vertikalen Wandabschnitt (33, 34, 53, 54) integriert sind.

14. Untere Struktur des Fahrzeugs (1) nach einem der vorhergehenden Ansprüche, wobei der erste Bereichsabschnitt (30) der Verstärkung (7) und der zweite Bereichsabschnitt (50) der Verstärkung (50) aus einem einzelnen Bauteil hergestellt und nahtlos einstückig ausgebildet sind.

15. Fahrzeug (1), aufweisend eine untere Struktur nach einem der vorhergehenden Ansprüche.

## Revendications

1. Structure inférieure d'un véhicule (1), comprenant :
une paire de bas de caisse droit et gauche (2) s'étendant dans une direction longitudinale de véhicule et présentant une section transversale fermée ;
des traverses (60) s'étendant dans une direction de largeur de véhicule entre la paire de bas de caisse (2) et prévues pour être séparées les unes des autres dans la direction longitudinale de véhicule ; et
un renfort (7) s'étendant dans la direction longitudinale de véhicule à l'intérieur de la section transversale fermée de chacun de la paire de bas de caisse (2) à une position de celui-ci, dans une direction verticale, qui chevauche les traverses (60) et renforçant le bas de caisse (2),
dans laquelle ledit renfort (7) inclut une partie de paroi latérale (31, 32, 51, 52) s'élargissant dans la direction longitudinale de véhicule et dans la direction de largeur de véhicule, présente une première partie de zone (30) qui chevauche lesdites traverses (60) dans la direction longitudinale de véhicule et une deuxième partie de zone (50) qui ne chevauche pas les traverses (60) dans la direction longitudinale de véhicule, **caractérisée en ce que** la rigidité de surface de ladite partie de paroi latérale (51, 52) au niveau de ladite deuxième partie de zone (50) est plus grande que celle de ladite partie de paroi latérale (31, 32) au niveau de ladite première partie de zone (30).

2. Structure inférieure du véhicule selon la revendication 1, dans laquelle ladite partie de paroi latérale (51, 52) au niveau de ladite deuxième partie de zone (50) présente une nervure en forme d'arc (55, 57) qui fait saillie dans la direction verticale.

3. Structure inférieure du véhicule (1) selon la revendication 1 ou 2, dans laquelle ladite partie de paroi latérale (51, 52) au niveau de ladite deuxième partie de zone (50) présente une partie de ligne de crête (43, 47) qui s'étend dans la direction de largeur de véhicule.

4. Structure inférieure du véhicule (1) selon l'une quelconque de la revendication 2 ou 3 précédente, dans laquelle ladite partie de paroi latérale (51, 52) comprend une partie de paroi latérale côté supérieur (51) qui est prévue au niveau d'un côté relativement supérieur et une partie de paroi latérale côté inférieur (52) qui est prévue au niveau d'un côté relativement inférieur, et chacune de ladite partie de paroi latérale côté supérieur (51) et de ladite partie de paroi latérale côté inférieur (52) au niveau de ladite deuxième partie de zone (50) présente ladite nervure (55, 57).

5. Structure inférieure du véhicule (1) selon la revendication 4, dans laquelle une nervure côté supérieur (55) en tant que ladite nervure prévue au niveau de ladite partie de paroi latérale côté supérieur (51) est configurée pour être évidée vers le bas, une nervure côté inférieur (57) en tant que ladite nervure prévue au niveau de ladite partie de paroi latérale côté inférieur (52) est configurée pour être évidée vers le haut, et ladite nervure côté supérieur (55) et ladite nervure côté inférieur (57) se chevauchent mutuellement dans une vue en plan.

6. Structure inférieure du véhicule (1) selon la revendication 5, dans laquelle une partie de sommet (55c) de ladite nervure côté supérieur (55) et une autre partie de sommet (57c) de ladite nervure côté inférieur (57) se chevauchent mutuellement dans la vue en plan.

7. Structure inférieure du véhicule (1) selon la revendication 5 ou 6, dans laquelle ladite nervure côté supérieur (55) comprend une première nervure côté supérieur (55a) et une deuxième nervure côté supérieur (55b) et/ou ladite nervure côté inférieur (57) comprend une première nervure côté inférieur (57a) et une deuxième nervure côté inférieur (57b), de préférence la position de la partie de sommet (55c) est différente entre la première nervure côté supérieur (55a) et la deuxième nervure côté supérieur (55b) et/ou la position de la partie de sommet (57c) est différente entre la première nervure côté inférieur (57a) et la deuxième nervure côté inférieur (57b).

8. Structure inférieure du véhicule (1) selon l'une quelconque des revendications 2 à 7, dans laquelle ladite nervure (55, 57) est d'une forme polygonale dans une vue en plan.

9. Structure inférieure du véhicule (1) selon l'une quelconque des revendications 2 à 7, dans laquelle ladite nervure (55, 57) est d'une forme triangulaire ou d'une forme rectangulaire dans la vue en plan.

10. Structure inférieure du véhicule (1) selon l'une quelconque des revendications 1 - 9, dans laquelle ladite partie de paroi latérale (31, 32) au niveau de la première partie de zone (30) présente une partie de ligne de crête (40, 44) qui s'étend dans la direction de largeur de véhicule.

11. Structure inférieure du véhicule (1) selon la revendication 10, dans laquelle au moins une des parties de paroi latérale (31, 32) au niveau de la première partie de zone (30) est d'une forme irrégulière, en particulier d'une forme concave-convexe, lorsqu'elle est vue dans la direction latérale.

12. Structure inférieure du véhicule (1) selon la revendication 10 ou 11, dans laquelle ladite partie de paroi latérale (31, 32) au niveau de la première partie de zone (30) comprend une première partie de face plane (31a, 32a) située au niveau d'un côté relativement supérieur, une deuxième partie de face plane (31b 32b) située au niveau d'un côté relativement inférieur, et une partie de raccordement (31c, 32c) reliant ladite première partie de face plane (31a, 32a) et ladite deuxième partie de face plane (31b, 32b) dans la direction verticale, et lesdites premières parties de ligne de crête (40, 44) sont positionnées entre ladite première partie de face plane (31a, 32a) et ladite partie de raccordement (31c, 32c) et entre ladite deuxième partie de face plane (31b, 32b) et ladite partie de raccordement.

13. Structure inférieure du véhicule (1) selon l'une quelconque des revendications 1 à 12, dans laquelle ladite partie de paroi latérale (31, 32, 51, 52) comprend une partie de paroi latérale côté supérieur (31, 51) qui est prévue au niveau d'un côté relativement supérieur et une partie de paroi latérale côté inférieur (32, 52) qui est prévue au niveau d'un côté relativement inférieur, ledit renfort (7) inclut en outre une paire de parties de paroi verticale droite et gauche (33, 34, 53, 54) qui relient des parties d'extrémité côté droit respectives de ladite partie de paroi latérale côté supérieur (31, 51) et de ladite partie de paroi latérale côté inférieur (32, 52) et des parties d'extrémité côté gauche respectives de ladite partie de paroi latérale côté supérieur (31, 51) et de ladite partie de paroi latérale côté inférieur (32, 52) dans la direction verticale, et ladite partie de paroi latérale côté supérieur (31, 51), la partie de paroi latérale côté inférieur (32, 52) et ladite paire de parties de paroi verticale droite et gauche (33, 34, 53, 54) sont intégrées.

14. Structure inférieure du véhicule (1) selon l'une quelconque des revendications précédentes, dans laquelle la première partie de zone (30) du renfort (7) et la deuxième partie de zone (50) du renfort (50) sont faites d'un élément unique et formées d'un seul tenant de manière continue.

15. Véhicule (1) incluant une structure inférieure selon l'une quelconque des revendications précédentes.
